# EUROPEAN PATENT APPLICATION

(11) **EP 3 848 409 A1**
(43) Date of publication of application: **14.07.2021**
(21) Application number: 20151486.6
(22) Date of filing: 13.01.2020
(51) Int. Cl.: C08J 9/28, C08G 18/00

(54) **POLYUREA/POLYURETHANE-CROSSLINKED ALGINATE AEROGELS**

(71) Applicant: BASF SE, 67056 Ludwigshafen am Rhein (DE)
(72) Inventor: Fricke, Marc, 49448 Lemförde (DE); Paraskevopoulou, Patrina, 17123 Athen (GR); Gurikov, Pavel, 21079 Hamburg (DE); Chriti, Despoina, 14232 Athen (GR); Papastergiou, Maria, 16451 Athen (GR); Raptopoulos, Grigorios, 16232 Athen (GR); Athamneh, Tamara, 21073 Hamburg (DE); Smirnova, Irina, 21073 Hamburg (DE); Movahed, Sohajl, 50674 Köln (DE); Weinrich, Dirk, 49448 Lemförde (DE); Loesberg, Wipke, 67056 Ludwigshafen (DE)
(74) Representative: Altmann Stößel Dick Patentanwälte PartG mbB

(57) **Abstract**

The present invention is directed to a process for preparing a porous material, at least comprising the steps of providing a mixture (I) comprising a hydrogel (HG) of a water soluble polysaccharide, exposing the gel (HG) to a water miscible solvent (L1) to obtain a gel (A), exposing the gel (A) obtained in step b) to mixture (II) comprising a polyisocyanate to obtain a gel (B), and drying of the gel (B) obtained in step c). The present invention is further directed to the porous material, which is obtained or obtainable by the process according to the present invention as well as the use of porous materials according to the invention for cosmetic applications, for biomedical applications or for medical and pharmaceutical applications, as adsorbents, for personal health care products, as additive for food, as catalyst support, for the preparation of sensors, or for thermal or acoustic insulation.

## Description

The present invention is directed to a process for preparing a porous material, at least comprising the steps of providing a mixture (I) comprising a hydrogel (HG) of a water soluble polysaccharide, exposing the gel (HG) to a water miscible solvent (L1) to obtain a gel (A), exposing the gel (A) obtained in step b) to mixture (II) comprising a polyisocyanate to obtain a gel (B), and drying of the gel (B) obtained in step c). The present invention is further directed to the porous material, which is obtained or obtainable by the process according to the present invention as well as the use of porous materials according to the invention for cosmetic applications, for biomedical applications or for medical and pharmaceutical applications, as adsorbents, personal health care products, as additive for food, as catalyst support, for the preparation of sensors, or for thermal or acoustic insulation.

Porous materials, for example polymer foams, having pores in the size range of a few microns or significantly below and a high porosity of at least 70 % are particularly good thermal insulators on the basis of theoretical considerations.

Such porous materials having a small average pore diameter can be, for example, in the form of organic aerogels or xerogels which are produced with a sol-gel process and subsequent drying. In the sol-gel process, a sol based on a reactive organic gel precursor in a solvent is first produced and the sol is then gelled by means of a crosslinking reaction to form a gel. To obtain a porous material, for example an aerogel, the solvent has to be removed from the gel. This step will hereinafter be referred to as drying in the interests of simplicity.

The present invention relates to a process for the manufacture of polysaccharide-containing porous materials, as well as to the porous material as such and their use. In particular, the invention relates to a process for the manufacture of alginate-containing porous materials. It is for example known that alkali alginates such as sodium alginate are water-soluble, whereas earth-alkaline alginates such as calcium alginates are insoluble in water. Thus, gels can be prepared from water-soluble polysaccharides, in particular natural polysaccharides such as alginates.

A process for the manufacture of polysaccharide foams, in particular based on alginates, is known from WO 94/00512. According to one embodiment, WO 94/00512 also discloses a variant in which an insoluble carbonate or bi-carbonate salt is dispersed in the polysaccharide by polyvalent metal cations and the material is subsequently treated with an acid in order to release carbon dioxide and to crosslink, by the cations that form, the polysaccharide while a dimensionally stable foam structure is formed. According to the printed publication, foams of a thickness of up to 5 mm can be stabilized in this manner.

Also hybrid materials based on polysaccharides have been prepared. For example a polyurethane-alginate hybrid has been disclosed prepared from alginic acid and 2,4-toluene diisocyanate (TDI) in DMSO (J Polym Environ 21 (2013) 224-232). In the scientific literature, also polyurethane-alginate composite foams were disclosed, prepared from the reaction between sodium alginate and a polyurethane prepolymer, bearing three isocyanate functional groups and derived from a poly(oxy C2-4 alkylene) diol and TDI. Pluronic L-62 was used to form the reverse type of micelles, thus controlling the pore size of the foams (Journal of Hazardous Materials 162 (2009) 423-429).

However, although several materials based on mixtures, blends or composites of polyurethanes and alginates have been reported, actual polyurethane/polysaccharide copolymers, or products from urethane bond-formation between polysaccharides such as alginates and isocyanates are not known

It was therefore an object of the invention to provide a process for preparing a porous material based on a polysaccharide, in particular based on alginates with suitable functional groups

According to the present invention, this object is solved by a process for preparing a porous material, at least comprising the steps of:
a) providing a mixture (I) comprising a hydrogel (HG) of a water-soluble polysaccharide,
b) exposing the gel (HG) to a water-miscible solvent (L1) to obtain a gel (A),
c) exposing the gel (A) obtained in step b) to mixture (II) comprising a polyisocyanate to obtain a gel (B),
d) drying of the gel (B) obtained in step c).

It was surprisingly found that porous materials based on water-soluble polysaccharides could be prepared having functional groups which allow for further reactions and modifications of the porous materials with isocyanates after exchanging water to an isocyanate-compatible solvent.

According to the present invention, a mixture (I) comprising a hydrogel (HG) of a water-soluble polysaccharide is provided which is then exposed to a water-miscible solvent (L1) to obtain a gel (A) according to step b). According to the present invention, in step b), preferably conditions are chosen which allow that the gel (A) is formed. Gel (A) is then exposed to mixture (II) comprising a polyisocyanate to obtain a gel (B).

According to the present invention, the water-miscible solvent is miscible with water and furthermore has a sufficient miscibility with mixture (II) used in the process according to the present invention.

According to step d) of the process of the present invention, gel (B) is dried. The process of the present invention can also comprise further steps, for example temperature adjustments or solvent-exchange steps.

According to the present invention, water-soluble polysaccharides are used to form gels. Among them, the use of natural polysaccharides and/or their derivatives are especially attractive because of their stability, availability, renewability and low toxicity.

For the purposes of the present invention, a gel is a crosslinked system based on a polymer which is present in contact with a liquid solvent (known as solvogel or lyogel), or with water as liquid (aquagel or hydrogel). Here, the polymer phase forms a continuous three-dimensional network.

In the context of the present invention, water-soluble means that the solubility in water is sufficient to form a solution which can be used for preparing a gel.

Natural polysaccharides such as agar, alginate, carrageenan, cellulose, hyaluronic acid, pectin, starch, and xanthan gum as well as semi-synthetic polysaccharides such as modified cellulose, chitin and chitosan are particularly preferred.

It has surprisingly been found that the claimed method allows to produce biopolymer-based aerogels, i.e. polysaccharide-based aerogels, with suitable functional groups. Properties of the aerogels can be customized by adjusting the reaction conditions and the components used. According to the present invention, it is possible to influence the properties of the hydrogels and/or aerogels by varying the ratio of the components, as well as by pressure control and also by introducing a wide range of organic and inorganic materials in the gel matrix. Both mesoporous and macroporous (foam-like) aerogels can be produced by the process according to the present invention.

According to the present invention, the water-soluble polysaccharide preferably is selected from the group consisting of agar, alginate, carrageenan, cellulose, hyaluronic acid, pectin, starch, xanthan gum, modified cellulose, chitin and chitosan.

According to a further embodiment, the present invention also relates to a process as described above, wherein the water-soluble polysaccharide is an alginate.

According to the present invention, a hydrogel (HG) of the water-soluble polysaccharide is used. Suitable starting materials, in particular hydrogels (HG) of water-soluble polysaccharides are in principle known. Hydrogels are for example formed from the water-soluble polysaccharide and a suitable cross-linker.

According to the present invention, mixture (I) can also comprise further compound, for example further salts, in particular such salts that do not form gels, and customary auxiliaries known to those skilled in the art as further constituents. Mention may be made by way of example of surface-active substances, flame retardants, nucleating agents, oxidation stabilizers, lubricants and mold release agents, dyes and pigments, stabilizers, e.g. against hydrolysis, light, heat or discoloration, inorganic and/or organic fillers, reinforcing materials and biocides.

Further information regarding the abovementioned auxiliaries and additives may be found in the literature, e.g. in Plastics Additive Handbook, 5th edition, H. Zweifel, ed. Hanser Publishers, Munich, 2001.

According to step b), the gel (HG) is exposed to a water-miscible solvent (L1) to obtain a gel (A).

Suitable solvents are in principle known. In the context of the present invention, water-miscible means that the solvent is at least partially miscible with water in order to allow an exchange of solvent in the gel. Furthermore, the water-miscible solvent used in step b) preferably is also at least partially miscible with mixture (II).

Solvent exchange is carried out either by soaking the gel directly in the new solvent (one-step) or by following a sequential soaking (multi-step) in different water-to-new solvent mixtures with increasing content in the new solvent after a certain time (exchange frequency) in the previous soaking step (Robitzer et al., 2008, Langmuir, 24(21), 12547-12552). The solvent chosen for water replacement must satisfy the requirements of not dissolving the gel structure, preferably being sufficiently soluble, in particular completely soluble with the solvent which precedes them (water) and preferably also accepted for manufacturing of pharmaceuticals.

The solvent (L1) can in principle be any suitable compound or mixture of a plurality of compounds, which meets the above requirements with the solvent (L1) being liquid under the temperature and pressure conditions of step b).

In step b) of the process of the invention, the gel is usually formed by allowing to rest, e.g. by simply allowing the container, reaction vessel or reactor in which the mixture is present (hereinafter referred to as gelling apparatus) to stand. The mixture is preferably no longer stirred or mixed during gelling (gel formation) because this could hinder formation of the gel. According to the present invention, it is also possible to prepare a hydrogel or aerogel in formfor of beads or powder. Suitable methods are per se known to a person skilled in the art.

Gelling is known per se to a person skilled in the art and is described, for example, in WO 2009/027310 on page 21, line 19 to page 23, line 13.

Preferably, temperature and pressure in step b), are adjusted to conditions under which the gel forms. A suitable temperature might be in the range of from 10 to 40 °C, preferable in the range of from 15 to 35 °C.

The solvent exchange according to step b) might be carried out in one step or in multiple steps with varying concentration of the solvent. Preferably, the solvent exchange is carried out until a sufficient amount of the solvent is exchanged, for example 50% of the solvent, preferably up to 60%, 70%, 80%, 90%, 95%, or 98% of the solvent.

Possible solvents (L1) are, for example, ketones, aldehydes, alkyl alkanoates, organic carbonates, amides such as formamide and N-methylpyrollidone, sulfoxides such as dimethyl sulfoxide, aliphatic and cycloaliphatic halogenated hydrocarbons, halogenated aromatic compounds and fluorine-containing ethers. Mixtures of two or more of the abovementioned compounds are likewise possible.

Further possibilities as solvents (L1) are acetals, in particular diethoxymethane, dimethoxymethane and 1,3-dioxolane.

Dialkyl ethers and cyclic ethers are likewise suitable as solvent (L1). Preferred dialkyl ethers are, in particular, those having from 2 to 6 carbon atoms, in particular methyl ethyl ether, diethyl ether, methyl propyl ether, methyl isopropyl ether, propyl ethyl ether, ethyl isopropyl ether, dipropyl ether, propyl isopropyl ether, diisopropyl ether, methyl butyl ether, methyl isobutyl ether, methyl t-butyl ether, ethyl n-butyl ether, ethyl isobutyl ether and ethyl t-butyl ether. Preferred cyclic ethers are, in particular, tetrahydrofuran, dioxane and tetrahydropyran.

Aldehydes and/or ketones are particularly preferred as solvent (L1). Aldehydes or ketones suitable as solvent (L1) are, in particular, those corresponding to the general formula R²-(CO)-R¹, where R¹ and R² are each hydrogen or an alkyl group having 1, 2, 3, 4, 5, 6 or 7 carbon atoms. Suitable aldehydes or ketones are, in particular, acetaldehyde, propionaldehyde, n-butyraldehyde, isobutyraldehyde, 2-ethylbutyraldehyde, valeraldehyde, isopentaldehyde, 2-methylpentaldehyde, 2-ethylhexaldehyde, acrolein, methacrolein, crotonaldehyde, furfural, acrolein dimer, methacrolein dimer, 1,2,3,6-tetrahydrobenzaldehyde, 6-methyl-3-cyclohexenaldehyde, cyano-acetaldehyde, ethyl glyoxylate, benzaldehyde, acetone, diethyl ketone, methyl ethyl ketone, methyl isobutyl ketone, methyl n-butyl ketone, methyl pentylketone, dipropyl ketone, ethyl isopropyl ketone, ethyl butyl ketone, diisobutylketone, 5-methyl-2-acetyl furan, 2-acetylfuran, 2-methoxy-4-methylpentan-2-one, 5-methylheptan-3-one, octanone, cyclohexanone, cyclopentanone, and acetophenone. The abovementioned aldehydes and ketones can also be used in the form of mixtures. Ketones and aldehydes having alkyl groups having up to 3 carbon atoms per substituent are preferred as solvent (L1).

Further preferred solvents are alkyl alkanoates, in particular methyl formate, methyl acetate, ethyl formate, isopropyl acetate, butyl acetate, ethyl acetate, glycerine triacetate and ethyl acetoacetate. Preferred halogenated solvents are described in WO 00/24799, page 4, line 12 to page 5, line 4.

Further suitable solvents (L1) are organic carbonates such as for example dimethyl carbonate, ethylene carbonate, propylene carbonate or butylene carbonate.

In many cases, particularly suitable solvents (L1) are obtained by using two or more completely miscible compounds selected from the above-mentioned solvents.

According to a further embodiment, the present invention is directed to the process as disclosed above, wherein the solvent (L1) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.

According to step c) of the process of the present invention, the gel (A) is exposed to mixture (II) comprising a polyisocyanate to obtain a gel (B). Mixture (II) comprises at least one polyisocyanate but can also comprise further components, for example suitable solvents. Furthermore, mixture (II) can comprise suitable catalysts or additives.

For example suitable additives for hydrophobization such as silanes, fluorinated compounds or compounds with long and/or bulky alkyl chains can be used. Suitable additives are known to the person skilled in the art.

Mixture (II) may also comprise suitable flame retardants; blowing agents; or catalysts for polyurethane formation or polyisocyanurate formation or for other typical reactions of isocyanate (urea, allophanat, biuret etc). It is also possible in the invention that the mixture (II) comprises any desired combination of the components mentioned. The quantities used of the compounds mentioned in the mixture (II) can be the conventional quantities known in principle to the person skilled in the art.

The mixture (II) can comprise a blowing agent, for example a chemical or physical blowing agent, i.e. compounds which react with isocyanate to form a gas, preferably water or formic acid, particularly preferably water (chemical blowing agents) low-boiling-point components unreactive to isocyanate (physical blowing agents).

Flame retardants in any form can moreover be added to the mixture (II). Flame retardants that can be used are generally flame retardants known from the prior art. Examples of suitable flame retardants are brominated esters, brominated ethers (Ixol), and brominated alcohols such as dibromoneopentyl alcohol, tribromoneopentyl alcohol, and PHT-4-diol, and also chlorinated phosphates such as tris(2-chloroethyl) phosphate, tris(2-chloropropyl) phosphate (TCPP), tris(1,3-dichloropropyl) phosphate, tricresyl phosphate, tris(2,3-dibromopropyl) phosphate, tetrakis(2-chloroethyl) ethylenediphosphate, dimethyl methanephosphonate, diethyl diethanolaminomethylphosphonate, and also commercially available halogen-containing flame-retardant polyols. Other phosphates or phosphonates that can be used as liquid flame retardants are diethyl ethanephosphonate (DEEP), triethyl phosphate (TEP), dimethyl propylphosphonate (DMPP), and diphenyl cresyl phosphate (DPC). Flame retardants that can also be used to provide flame retardancy to rigid polyurethane foams, other than the flame retardants mentioned above, are inorganic or organic flame retardants such as red phosphorus, red phosphorus preparations, aluminum oxide hydrate, antimony trioxide, arsenic oxide, ammonium polyphosphate, and calcium sulfate, expandable graphite, or cyanuric acid derivatives, e.g. melamine, or a mixture of at least two flame retardants, e.g. of ammonium polyphosphates and melamine, and also optionally maize starch or ammonium polyphosphate, melamine, and expandable graphite; aromatic polyesters can optionally be used for this purpose.

Particularly preferred flame retardants are composed of atoms selected from the group consisting of carbon, hydrogen, phosphorus, nitrogen, oxygen, and chlorine, more specifically from the group consisting of carbon, hydrogen, phosphorus, and chlorine.

The conventional PUR and PIR catalysts can moreover be added to the mixture (II). Examples of catalysts that can be used to form urethane structures or isocyanurate structures are carboxylate salts, and also basic, preferably aminic catalysts.

It is advantageous to use basic urethane catalysts, for example tertiary amines such as triethylamine, tributylamine, dimethylbenzylamine, dicyclohexylmethylamine, dimethylcyclohexylamine, and alkanolamine compounds such as triethanolamine, triisopropanolamine, N,N',N"-tris(dialkylaminoalkyl)hexahydrotriazines, e.g. N,N',N"-tris(dimethylaminopropyl)-s-hexahydrotriazine, and triethylenediamine. Preference is given to triethylamine, dimethylcyclohexylamine, and N,N',N"-tris(dialkylaminoalkyl)hexahydrotriazines, e.g. N,N',N"-tris(dimethylaminopropyl)-s-hexahydrotriazine, particularly preferably dimethylcyclohexylamine.

Possible catalysts that may be mentioned having a carboxylate structure are primarily ammonium or alkali metal carboxylates, preferably alkali metal carboxylate salts, particularly preferably alkali metal formate, alkali metal acetate, or alkali metal hexanoate. Further information relating to the starting materials mentioned and relating to other starting materials can be found in the technical literature, for example in Kunststoffhandbuch, Band VII, Polyurethane [Plastics handbook, volume VII, Polyurethanes], Carl Hanser Verlag Munich, Vienna, 3rd edition 1993.

It is further optionally possible that other auxiliaries and/or additional substances are added to the mixture (II). Mention may be made by way of example of surfactant substances, fillers, dyes, pigments, hydrolysis stabilizers, and fungistatic and bacteriostatic substances.

Examples of surfactant substances that can be used are compounds which serve to promote homogenization of the starting materials. Examples that may be mentioned are emulsifiers, for example the sodium salts of castor oil sulfates or of fatty acids, and also salts of fatty acids with amines, e.g. diethylamine oleate, diethanolamine stearate, diethanolamine ricinoleate, salts of sulfonic acids, e.g. alkali metal or ammonium salts of dodecylbenzene- or dinaphthylmethane-disulfonic acid and ricinoleic acid; foam stabilizers, for example siloxane-oxyalkylene copolymers and other organopolysiloxanes, ethoxylated alkylphenols, ethoxylated fatty alcohols, paraffin oils, castor oil esters/ricinoleic esters, Turkey red oil, and peanut oil, and cell regulators, for example paraffins, fatty alcohols, and dimethylpolysiloxanes. Oligomeric acrylates having polyoxyalkylene and fluoroalkane moieties as pendant groups are moreover suitable for improving emulsifying action.

Suitable polyisocyanates are in principle known to the person skilled in the art. Possible polyfunctional isocyanates are aromatic, aliphatic, cycloaliphatic and/or araliphatic isocyanates. Such polyfunctional isocyanates are known per se or can be prepared by methods known per se. The polyfunctional isocyanates can also be used, in particular, as mixtures, so that the mixture (II) in this case comprises various polyfunctional isocyanates. Polyfunctional isocyanates which are suitable in the context of the present invention have two (hereinafter referred to as diisocyanates) or more than two isocyanate groups per molecule of the monomer component.

Thus, according to a further embodiment, the present invention is also directed to a process as disclosed above, wherein the polyisocyanate is selected from the group consisting of diisocyanates and triisocyanates.

Particularly suitable polyfunctional isocyanates are diphenylmethane 2,2'-, 2,4'- and/or 4,4'-diisocyanate (MDI), naphthylene 1,5-diisocyanate (NDI), tolylene 2,4- and/or 2,6-diisocyanate (TDI), 3,3'-dimethylbiphenyl diisocyanate, 1,2-diphenylethane diisocyanate and/or p-phenylene diisocyanate (PPDI), trimethylene, tetramethylene, pentamethylene, hexamethylene, heptamethylene and/or octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4- and/or 2,6-diisocyanate and dicyclohexylmethane 4,4'-, 2,4'- and/or 2,2'-diisocyanate.

Oligomeric diphenylmethane diisocyanate is particularly preferred as polyfunctional isocyanate. Oligomeric diphenylmethane diisocyanate (hereinafter referred to as oligomeric MDI) is an oligomeric condensation product or a mixture of a plurality of oligomeric condensation products and thus a derivative/derivatives of diphenylmethane diisocyanate (MDI). The polyfunctional isocyanates can preferably also be made up of mixtures of monomeric aromatic diisocyanates and oligomeric MDI.

Oligomeric MDI comprises one or more condensation products of MDI which have a plurality of rings and a functionality of more than 2, in particular 3 or 4 or 5. Oligomeric MDI is known and is frequently referred to as polyphenylpolymethylene isocyanate or as polymeric MDI. Oligomeric MDI is usually made up of a mixture of MDI-based isocyanates having various functionalities. Oligomeric MDI is usually used in admixture with monomeric MDI.

According to the present invention, also trimers of other isocyanates can be used, for example a trimer of hexamethylene triisocyanate, tris(4-isocyanatophenyl)methane (TIPM), or the trimer of IPDI and derivatives thereof or mixtures comprising these compounds.

Furthermore, prepolymers prepared from polyisocyanates and suitable compounds having at least two functional groups reactive towards isocyanates can be used in the context of the present invention.

The process of the present invention can also comprise further steps, for example suitable treatment steps.

According to the present invention, it is also possible to combine treatment step c) with a further step of the preparation process of the porous material, such as for example a solvent exchange step prior to a drying step or a depressurization step in aerogel production.

In the context of the present invention, further solvent exchange steps might be carried out or removal of unreacted mixture (II) prior to step d). According to a further embodiment, the gel (B) obtained in step c) might be exposed to a solvent (L2). Thus, according to a further embodiment, the present invention is also directed to a process as disclosed above, wherein the gel (B) obtained in step c) is exposed to solvent (L2) prior to step d).

Suitable solvents are in principle those solvents which are used as solvent (L1). In principle, solvent (L2) might be identical to solvent (L1). According to the present invention, it is also possible to use different solvents (L1) and (L2) in the process of the present invention. Preferably, solvent (L2) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.

Thus, according to a further embodiment, the present invention is also directed to a process as disclosed above, wherein the solvent (L2) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.

The conditions for the treatment step c) can vary in wide ranges. Preferably step c) is carried out at a temperature up to the boiling point of the solvent, for example at a temperature in the range of from 20 to 90°C, more preferably in the range of from 50 to 90°C in case the process is carried out under ambient pressure. In case the process is carried out under pressure, the process preferably is carried out at a temperature below the decomposition temperature of the polysaccharide. Therefore, according to a further embodiment, the present invention is directed to the process as disclosed above, wherein step c) is carried out at a temperature in the range of from 20 to 90 °C.

In step c), gel (B) is obtained. According to step d) of the process of the present invention, gel (B) obtained in step c) is dried.

Drying in step d) takes place in a known manner. Drying under supercritical conditions is preferred, preferably after replacement of the solvent by CO₂ or other solvents suitable for the purposes of supercritical drying. Such drying is known per se to a person skilled in the art. Supercritical conditions characterize a temperature and a pressure at which CO₂ or any solvent used for removal of the gelation solvent is present in the supercritical state. In this way, shrinkage of the gel body on removal of the solvent can be reduced.

However, in view of the simple process conditions, preference is given to drying the gels obtained by conversion of the liquid comprised in the gel into the gaseous state at a temperature and a pressure below the critical temperature and the critical pressure of the liquid comprised in the gel.

According to one embodiment, the drying of the gel obtained is preferably carried out by converting the solvent into the gaseous state at a temperature and a pressure below the critical temperature and the critical pressure of the solvent. Accordingly, drying is preferably carried out by removing the solvent which was present in the reaction without prior replacement by a further solvent.

Such methods are likewise known to those skilled in the art and are described in WO 2009/027310 on page 26, line 22 to page 28, line 36.

According to a further embodiment, the present invention is directed to the process for preparing a porous material as disclosed above, wherein the drying according to step d) is carried out by converting the liquid comprised in the gel into the gaseous state at a temperature and a pressure below the critical temperature and the critical pressure of the liquid comprised in the gel.

According to a further embodiment, the present invention is directed to the process for preparing a porous material as disclosed above, wherein the drying according to step d) is carried out under supercritical conditions.

The process of the present can also comprise further steps such as for example a shaping step. According to the present invention, the porous material can for example be cut into shape after step d) of the process. According to the present invention it is also possible to form the gel in a defined shape.

According to the present invention, the (still) flowable mixture (I) might be poured into a mold with the desired shape. Herein, layer thicknesses of the flowable polysaccharide composition, for example the alginate composition of up to 50 cm are possible. Preferred shapes are box shapes with a rectangular layout. Pouring can take place at any suitable stage of the process. According to the present invention, it is also possible to prepare a hydrogel or aerogel in form of beads or powder.

The present invention also relates to a porous material, which is obtained or obtainable by the process as described above. The porous materials of the present invention are preferably aerogels or xerogels.

According to the present invention, the porous material might comprise further additives. The porous material according to the present invention preferably has a content of the polysaccharide in the porous material in the range of from 1 to 99 %, in particular in the range of from 1 to 80%, more preferable in the range of from 10 to 70%.

According to a further embodiment, the present invention is directed to the porous material as disclosed above, wherein the content of the polysaccharide in the porous material is in the range of from 1 to 99 %.

For the purposes of the present invention, a xerogel is a porous material which has been produced by a sol-gel process in which the liquid phase has been removed from the gel by drying below the critical temperature and below the critical pressure of the liquid phase ("subcritical conditions"). An aerogel is a porous material which has been produced by a sol-gel process in which the liquid phase has been removed from the gel under supercritical conditions.

The process as disclosed above results in porous materials with improved properties, in particular functionalized porous materials. Aerogels produced according to the process of the present invention preferably have a low density, and preferably high specific surface area, for example in the range of from 50 to 1000 m²/g. Furthermore, a pore volume in the range of from 2.1 to 9.5 cm³/g for pore sizes <150nm can be obtained.

Furthermore, the present invention therefore is directed to a porous material which is obtained or obtainable by the process for preparing a porous material as disclosed above. In particular, the present invention is directed to a porous material which is obtained or obtainable by the process for preparing a porous material as disclosed above, wherein the drying according to step d) is carried out under supercritical conditions.

The porous material according to the invention preferably has a density in the range of 0.005 to 1,5 g/cm³, preferably from 0.01 to 0.5 g/cm³ (determined according to DIN 53420).

For characterization of the porous structure of aerogels a Micromeritics Tristar II 3020 surface area and porosity analyzer was used. It uses adsorption and desorption of nitrogen at a constant temperature of 77 K.

The volume average pore diameter of the porous material is preferably not more than 4 microns. The volume average pore diameter of the porous material is particularly preferably not more than 3 microns, very particularly preferably not more than 2 microns and in particular not more than 1 micron.

Although a very small pore size combined with a high porosity is desirable from the point of view of a low thermal conductivity, from the point of view of production and to obtain a sufficiently mechanically stable porous material, there is a practical lower limit to the volume average pore diameter. In general, the volume average pore diameter is at least 20 nm, preferably at least 50 nm.

The porous material which can be obtained according to the invention preferably has a porosity of at least 70 % by volume, in particular from 60 to 99 % by volume, particularly preferably at least 80 % by volume, very particularly preferably at least 85 % by volume, in particular from 85 to 95 % by volume. The porosity in % by volume means that the specified proportion of the total volume of the porous material comprises pores. Although a very high porosity is usually desirable from the point of view of a minimal thermal conductivity, an upper limit is imposed on the porosity by the mechanical properties and the processability of the porous material.

The process of the invention can give a coherent porous material. According to the present invention it is also possible to prepare a polymer powder or particles. Here, the three-dimensional shape of the resulting porous material is determined by the shape of the gel which is in turn determined by the shape of the gelling apparatus. Thus, for example, a cylindrical gelling vessel usually gives an approximately cylindrical gel which can then be dried to give a porous material having a cylindrical shape. According to the present invention, it is also possible to prepare a hydrogel or aerogel in form of beads powder.

The porous materials which can be obtained according to the invention preferably have a low thermal conductivity, a high porosity and a low density combined with high mechanical stability. In addition, the porous materials preferably have a small average pore size. The combination of the abovementioned properties allows the materials to be used as insulation material in the field of thermal insulation, in particular for applications in the ventilated state as building materials in household appliances, electronic devices or apparel.

The porous materials which can be obtained according to the invention have advantageous thermal properties and preferably also further advantageous properties such as simple processability and high mechanical stability, for example low brittleness.

The present invention is also directed to the use of porous materials as disclosed above or a porous material obtained or obtainable according to a process as disclosed above as thermal insulation material or for vacuum insulation panels. The thermal insulation material is for example insulation material which is used for insulation in the interior or the exterior of a building. The porous material according to the present invention can advantageously be used in thermal insulation systems such as for example composite materials.

According to a further embodiment, the present invention therefore is directed to the use of porous materials as disclosed above, wherein the porous material is used in interior or exterior thermal insulation systems.

Furthermore, the present invention relates to the use of the porous materials according to the invention for cosmetic applications, for biomedical applications, for pharmaceutical applications and also for the manufacture of a medical product. Such medical products include, for example, wound dressings, transdermal dressings, wound plasters, implants, substrates for cultivating cells, means for the controlled, in particular retarded, administering of active substances in the form of said implants, but also as a preparation to effect such retardation that can be administered orally, or as so-called satiation comprimates that have a satiation effect because of the expansion of the compressed porous shaped article in the stomach. The latter may also be loaded with dietary supplements, vitamins, minerals or other active substances.

According to a further aspect, the present invention is also directed to the use of porous materials as disclosed above or a porous material obtained or obtainable by the process as disclosed above for cosmetic applications, for biomedical applications or for medical and pharmaceutical applications, as adsorbents, for personal health care products, as additive for food, as catalyst support, for the preparation of sensors, or for thermal or acoustic insulation.

Preferred embodiments may be found in the claims and the description. Combinations of preferred embodiments do not go outside the scope of the present invention. Preferred embodiments of the components used are described below.

The present invention includes the following embodiments, wherein these include the specific combinations of embodiments as indicated by the respective interdependencies defined therein.
1. Process for preparing a porous material, at least comprising the steps of:
   a) providing a mixture (I) comprising a hydrogel (HG) of a water-soluble polysaccharide,
   b) exposing the gel (HG) to a water-miscible solvent (L1) to obtain a gel (A),
   c) exposing the gel (A) obtained in step b) to mixture (II) comprising a polyisocyanate to obtain a gel (B),
   d) drying of the gel (B) obtained in step c).
2. The process according to embodiment 1, wherein the water-soluble polysaccharide is selected from the group consisting of agar, alginate, carrageenan, cellulose, hyaluronic acid, pectin, starch, xanthan gum, modified cellulose, chitin and chitosan.
3. The process according to embodiment 1, wherein the water-soluble polysaccharide is an alginate.
4. The process according to any of embodiments 1 to 3, wherein step c) is carried out at a temperature up to the boiling point of the solvent, for example at a temperature in the range of from 20 to 90°C.
5. The process according to any of embodiments 1 to 4, wherein the solvent (L1) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.
6. The process according to any of embodiments 1 to 5, wherein the gel (B) obtained in step c) is exposed to solvent (L2) prior to step d).
7. The process according to embodiment 6, wherein the solvent (L2) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.
8. The process according to any of embodiments 1 to 7, wherein the polyisocyanate is selected from the group consisting of diisocyanates and triisocyanates.
9. The process according to any of embodiments 1 to 8, wherein the drying according to step d) is carried out by converting the liquid comprised in the gel into the gaseous state at a temperature and a pressure below the critical temperature and the critical pressure of the liquid comprised in the gel.
10. The process according to any of embodiments 1 to 8, wherein the drying according to step d) is carried out under supercritical conditions.
11. A porous material, which is obtained or obtainable by the process according to any of embodiments 1 to 10.
12. The porous material according to embodiment 11, wherein the content of the polysaccharide in the porous material is in the range of from 1 to 99 %.
13. The use of porous materials according to embodiment 11 or 12 or a porous material obtained or obtainable by the process according to any of embodiments 1 to 10 for cosmetic applications, for biomedical applications or for medical and pharmaceutical applications, as adsorbents, for personal health care products, as additive for food, as catalyst support, for the preparation of sensors, or for thermal or acoustic insulation.
14. Process for preparing a porous material, at least comprising the steps of:
   a) providing a mixture (I) comprising a hydrogel (HG) of an alginate,
   b) exposing the gel (HG) to a water-miscible solvent (L1) to obtain a gel (A),
   c) exposing the gel (A) obtained in step b) to mixture (II) comprising a polyisocyanate to obtain a gel (B),
   d) drying of the gel (B) obtained in step c).
15. The process according to embodiment 14, wherein step c) is carried out at a temperature in the range of from 20 to 90 °C.
16. The process according to any of embodiments 14 or 15, wherein the solvent (L1) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.
17. The process according to any of embodiments 14 to 16, wherein the gel (B) obtained in step c) is exposed to solvent (L2) prior to step d).
18. The process according to embodiment 17, wherein the solvent (L2) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.
19. The process according to any of embodiments 14 to 18, wherein the polyisocyanate is selected from the group consisting of diisocyanates and triisocyanates.
20. The process according to any of embodiments 14 to 19, wherein the drying according to step d) is carried out by converting the liquid comprised in the gel into the gaseous state at a temperature and a pressure below the critical temperature and the critical pressure of the liquid comprised in the gel.
21. The process according to any of embodiments 14 to 19, wherein the drying according to step d) is carried out under supercritical conditions.
22. A porous material, which is obtained or obtainable by the process according to any of embodiments 14 to 21.
23. The porous material according to embodiment 22, wherein the content of the polysaccharide in the porous material is in the range of from 1 to 99 %.
24. The use of porous materials according to embodiment 22 or 23 or a porous material obtained or obtainable by the process according to any of embodiments 14 to 21 for cosmetic applications, for biomedical applications or for medical and pharmaceutical applications, as adsorbents, for personal health care products, as additive for food, as catalyst support, for the preparation of sensors, or for thermal or acoustic insulation.

Examples will be used below to illustrate the invention.

### EXAMPLES

### 1. Materials

| | |
|---|---|
| Component a1: | Sodium alginate (PROTANAL LF 240 D) having a guluronic acid (G) content of 30-35% (hereinafter "G35 alginate"). |
| Component a2: | Sodium alginate (PROTANAL LF 200 S) having a guluronic acid (G) content of 65-75% (hereinafter "G75 alginate"). |
| Component a3: | *δ* -gluconolactone (hereinafter GDL). |
| Component a4: | Calcium carbonate (hereinafter CaCO₃). |
| Component a5: | Calcium chloride (hereinafter CaCl₂). |
| Component a6: | Trimeric HDI (Desmodur N3300) having an NCO content of 21.8 g per 100 g in accordance with M105-ISO 11909, a functionality in the region of three and a viscosity of 2500 mPa*s at 25 °C in accordance with M014-ISO 3219/A.3 (hereinafter "N3300"). |
| Component a7: | Acetonitrile (hereinafter "MeCN"). |

### 2. Examples

Compressive strength values for all examples are shown in Table 1. Furthermore, data regarding the contact angle of water droplets and the density are included for several examples.

### 2.1 Example 1 (comparative)

A solution of sodium alginate in H₂O was prepared by dissolving 0.75 g G35 alginate in 99.25 g of H₂O at 25 °C. 0.09 g of CaCO₃ were added and the mixture was stirred for a few minutes. 0.31 g GDL were added to the dispersion. The mixture was homogenized with vigorous mechanical stirring for 10 sec and then it was transferred to a mold. The mold was closed and left at room temperature for 20 h. The wet-gels were stepwise solvent-exchanged with MeCN/H₂O mixtures (30, 60, 90% v/v) and thrice with dry MeCN. The resulting gels were either used for the synthesis of crosslinked alginate gels or were extracted with scCO₂ to give the corresponding porous material (referred to as G35-0.75).

### 2.2 Example 2 (comparative)

A solution of sodium alginate in H₂O was prepared by dissolving 1.38 g G35 alginate in 98.62 g of H₂O at 25 °C. 0.17 g of CaCO₃ were added and the mixture was stirred for a few minutes. 0.57 g GDL were added to the dispersion. The mixture was homogenized with vigorous mechanical stirring for 10 sec and then it was transferred to a mold. The mold was closed and left at room temperature for 20 h. The wet-gels were stepwise solvent-exchanged with MeCN/H₂O mixtures (30, 60, 90% v/v) and thrice with dry MeCN. The resulting gels were either used for the synthesis of crosslinked alginate gels or were extracted with scCO₂ to give the corresponding porous material (referred to as G35-1.38).

### 2.3 Example 3 (comparative)

A solution of sodium alginate in H₂O was prepared by dissolving 0.75 g G75 alginate in 99.25 g of H₂O at 25 °C. 0.09 g of CaCO₃ were added and the mixture was stirred for a few minutes. 0.31 g GDL were added to the dispersion. The mixture was homogenized with vigorous mechanical stirring for 10 sec and then it was transferred to a mold. The mold was closed and left at room temperature for 20 h. The wet-gels were stepwise solvent-exchanged with MeCN/H₂O mixtures (30, 60, 90% v/v) and thrice with dry MeCN. The resulting gels were either used for the synthesis of crosslinked alginate gels or were extracted with scCO₂ to give the corresponding porous material (referred to as G75-0.75).

### 2.4 Example 4 (comparative)

A solution of sodium alginate in H₂O was prepared by dissolving 1.38 g G75 alginate in 98.62 g of H₂O at 25 °C. 0.17 g of CaCO₃ were added and the mixture was stirred for a few minutes. 0.57 g GDL were added to the dispersion. The mixture was homogenized with vigorous mechanical stirring for 10 sec and then it was transferred to a mold. The mold was closed and left at room temperature for 20 h. The wet-gels were stepwise solvent-exchanged with MeCN/H₂O mixtures (30, 60, 90% v/v) and thrice with dry MeCN. The resulting gels were either used for the synthesis of crosslinked alginate gels or were extracted with scCO₂ to give the corresponding porous material (referred to as G75-1.38).

### 2.5 Example 5

A solution of isocyanate in MeCN was prepared by dissolving 24.15 g N3300 in 100 mL dry MeCN. G35-0.75 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G35-0.75-24.15).

### 2.6 Example 6

A solution of isocyanate in MeCN was prepared by dissolving 41.25 g N3300 in 100 mL dry MeCN. G35-0.75 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G35-0.75-41.25).

### 2.7 Example 7

A solution of isocyanate in MeCN was prepared by dissolving 24.15 g N3300 in 100 mL dry MeCN. G35-1.38 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G35-1.38-24.15).

### 2.8 Example 8

A solution of isocyanate in MeCN was prepared by dissolving 41.25 g N3300 in 100 mL dry MeCN. G35-0.75 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G35-1.38-41.25).

### 2.9 Example 9

A solution of isocyanate in MeCN was prepared by dissolving 24.15 g N3300 in 100 mL dry MeCN. G75-0.75 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G75-0.75-24.15).

### 2.10 Example 10

A solution of isocyanate in MeCN was prepared by dissolving 41.25 g N3300 in 100 mL dry MeCN. G75-0.75 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G75-0.75-41.25).

### 2.11 Example 11

A solution of isocyanate in MeCN was prepared by dissolving 24.15 g N3300 in 100 mL dry MeCN. G75-1.38 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G75-1.38-24.15).

### 2.12 Example 12

A solution of isocyanate in MeCN was prepared by dissolving 41.25 g N3300 in 100 mL dry MeCN. G75-1.38 wet-gels were immersed in their four-fold volume of the isocyanate solution and were kept in that solution for 24 h. The system was transferred into the oven at 70 °C for 72 h. The resulting wet-gels were solvent exchanged thrice with dry MeCN and extracted with scCO2 to produce the corresponding porous material (referred to as G75-1.38-41.25).

### 3. Results

**Table 1. Results.**

| | Density [kg/m³] | Ultimate compressive strength [MPa] | Contact angle (H₂O) |
|---|---|---|---|
| Example 1 (comparative) G35-0.75 | 37 | 95 | hydrophilic |
| Example 2 (comparative) G35-1.38 | 45 | 77 | hydrophilic |
| Example 3 (comparative) G75-0.75 | 120 | 210 | hydrophilic |
| Example 4 (comparative) G75-1.38 | 139 | 157 | hydrophilic |
| Example 5 G35-0.75-24.15 | 76 | 81 | 96° |
| Example 6 G35-0.75-41.25 | 83 | 83 | 100° |
| Example 7 G35-1.38-24.15 | 89 | 63 | 108° |
| Example 8 G35-1.38-41.25 | 99 | 66 | 100° |
| Example 9 G75-0.75-24.15 | 220 | 674 | 95° |
| Example 10 G75-0.75-41.25 | 260 | 732 | 96° |
| Example 11 G75-1.38-24.15 | 370 | 545 | 95° |
| Example 12 G75-1.38-41.25 | 420 | 573 | 92° |

### Literature cited:

WO 94/00512 A1,
J Polym Environ 21 (2013) 224-232,
Journal of Hazardous Materials 162 (2009) 423-429,
Plastics Additive Handbook, 5th edition, H. Zweifel, ed. Hanser Publishers, Munich, 2001,
Robitzer et al., 2008, Langmuir, 24(21), 12547-12552,
WO 2009/027310 A1,
WO 2000/24799 A1,
Plastics handbook, volume VII, Polyurethanes, Carl Hanser Verlag Munich, 3rd edition 1993.

## Claims

1. Process for preparing a porous material, at least comprising the steps of:
a) providing a mixture (I) comprising a hydrogel (HG) of a water-soluble polysaccharide,
b) exposing the gel (HG) to a water-miscible solvent (L1) to obtain a gel (A),
c) exposing the gel (A) obtained in step b) to mixture (II) comprising a polyisocyanate to obtain a gel (B),
d) drying of the gel (B) obtained in step c).

2. The process according to claim 1, wherein the water-soluble polysaccharide is selected from the group consisting of agar, alginate, carrageenan, cellulose, hyaluronic acid, pectin, starch, xanthan gum, modified cellulose, chitin and chitosan.

3. The process according to claim 1, wherein the water-soluble polysaccharide is an alginate.

4. The process according to any of claims 1 to 3, wherein step c) is carried out at a temperature in the range of from 20 to 90 °C.

5. The process according to any of claims 1 to 4, wherein the solvent (L1) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.

6. The process according to any of claims 1 to 5, wherein the gel (B) obtained in step c) is exposed to solvent (L2) prior to step d).

7. The process according to claim 6, wherein the solvent (L2) is selected from the group consisting of ethers, esters, alcohols, ketones, aldehydes, hydrocarbons, nitriles, alkyl alkanoates, amides, sulfoxides, organic carbonates, aliphatic and cycloaliphatic halogenated hydrocarbons, halogenated aromatic compounds and fluorine-containing ethers.

8. The process according to any of claims 1 to 7, wherein the polyisocyanate is selected from the group consisting of diisocyanates and triisocyanates.

9. The process according to any of claims 1 to 8, wherein the drying according to step d) is carried out by converting the liquid comprised in the gel into the gaseous state at a temperature and a pressure below the critical temperature and the critical pressure of the liquid comprised in the gel.

10. The process according to any of claims 1 to 8, wherein the drying according to step d) is carried out under supercritical conditions.

11. A porous material, which is obtained or obtainable by the process according to any of claims 1 to 10.

12. The porous material according to claim 11, wherein the content of the polysaccharide in the porous material is in the range of from 1 to 99 %.

13. The use of porous materials according to claim 11 or 12 or a porous material obtained or obtainable by the process according to any of claims 1 to 10 for cosmetic applications, for biomedical applications or for medical and pharmaceutical applications, as adsorbents, for personal health care products, as additive for food, as catalyst support, for the preparation of sensors, or for thermal or acoustic insulation.
